# EUROPEAN PATENT APPLICATION

(11) **EP 2 090 814 A1**
(43) Date of publication of application: **19.08.2009**
(21) Application number: 08002830.1
(22) Date of filing: 15.02.2008
(51) Int. Cl.: F16L 3/233, B65D 63/10

(54) **One-piece fastener**

(71) Applicant: Tecmetron ApS, 1270 København K (DK)
(72) Inventor: Markussen, Rudy, 2770 Kastrup (DK)
(74) Representative: Thierry-Carstensen, Ole Jean

(57) **Abstract**

The present invention relates to a one-piece fastener (1) comprising: a housing (2) defining a longitudinal axis, said housing having: a first side having a first inner side surface and an entry aperture (8), a second side (9) having a second inner side surface (10), a third side (11) having a third inner side surface (12) and an exit aperture (13), a fourth side having a fourth inner side surface, a top side (16) with a top inner surface (17) and a guiding channel (20) defined by the second and fourth inner sides surfaces and the top and the bottom of the housing, where said guiding channel has a centre axis. Furthermore the one-piece fastener has a strap defining a longitudinal axis and having a first strap side and a second strap side wherein at least one side is provided with ratchet-shaped grooves, and the housing (2) further comprises a locking pawl (5) for engaging the ratchet-shaped grooves (4) on the strap (3), thereby securing the strap (3) in one direction in relation to the longitudinal axis of the strap and wherein the centre axis of the guiding channel is extending parallel to the longitudinal axis of the strap when the strap is engaged in the housing. Furthermore the top side of the housing (2) is provided with a first aperture (21) defining a centre axis perpendicular to the longitudinal of the housing and is adapted for receiving a fastening means (27).

## Description

### Technical Field

The present invention relates to a one-piece fastener comprising a housing defining a longitudinal axis, said housing having: an entry aperture, a second side having a second inner side surface, a third side having a third inner side surface and an exit aperture, a top side with a top inner surface and a guiding channel defined by the second and third inner side surfaces and the top and the bottom of the housing, where said guiding channel has a centre axis. Furthermore the one-piece fastener has a strap defining a longitudinal axis and has a first strap side and a second strap side wherein at least one side is provided with ratchet-shaped grooves, and the housing further comprises a locking pawl for engaging the ratchet-shaped grooves on the strap, thereby securing the strap in one direction in relation to the longitudinal axis of the strap and wherein the centre axis of the guiding channel is extending parallel to the longitudinal axis of the strap when the strap is engaged in the housing.

### Background Art

Different types of products for tying or binding elements, such as a cable into bundle, are known today. Such a one-piece cable tie is disclosed in EP 1818275 A1.

In some events the bundle of cable needs to be fastened to a wall, a ceiling or the like. In order to fasten the bundle of cables to a wall, a metal strip is cut into a suitable length measured from the radius of the bundle of elements to be fastened. Subsequently, the user fastens one end of metal strip to the wall and then holds the bundle of elements, while wrapping the metal strip around the bundle so as to form a loop around the bundle, where upon the second end of the metal strip is fastened to the wall. This is a very complicated and time demanding working process for fastening of cable to e.g. a wall.

### Disclosure of the Invention

An object of the present invention is, at least partly, to overcome the disadvantages of the prior art and to provide an improved and new one-piece fastener, which is less complicated to use in order to fasten a bundle of cables or the like to e.g. a wall or a ceiling.

This aspect and advantages becoming evident from the description below are obtained by a one-piece fastener comprising:
- a housing defining a longitudinal axis, said housing having;
   - a first side having a first inner side surface and an entry aperture,
   - a second side having a second inner side surface,
   - a third side having a third inner side surface and an exit aperture,
   - a fourth side having a fourth inner side surface,
   - a top side with a top inner surface and
   - a guiding channel defined by the second and third side surfaces and the top and the bottom of the housing, where said guiding channel has a centre axis,
- a strap defining a longitudinal axis and having a first strap side and a second strap side wherein at least one side is provided with ratchet-shaped grooves,
- wherein the housing further comprises a locking pawl for engaging the ratchet-shaped grooves on the strap, thereby securing the strap in one direction in relation to the longitudinal axis of the strap and wherein the centre axis of the guiding channel is extending parallel to the longitudinal axis of the strap when the strap is engaged in the housing,
- wherein the top side of the housing is provided with a first aperture defining a centre axis perpendicular to the longitudinal axis of the housing and being adapted to receive a fastening means.

By having a first aperture in the top side of the housing, the one-piece fastener can be fastened to e.g. the ceiling. Subsequently, the elements, such as cables, tubes etc., are bundled by placing the strap into the guide channel for an engagement of the ratchet-shaped grooves of the strap with the locking pawl of the housing.

In this way, the user is able to fasten the one-piece fastener to the ceiling without at the same time having to upload a heavy bundle of cables or the like.

Furthermore, the bundling of cables and mounting of the same to the ceiling is performed without additional accessories, such as a metal strip.

The elements to be secured, such as wood plates, cables or pipes for cables or similar, are primarily developed towards a good quality in their secured position. Therefore, the handling of such elements could be difficult because the manufactures do not focus on the mounting process, resulting in situations where mounting of the elements is painful or even directly harmful to worker. Therefore, it is important that the securing of the elements is an easier but still secure process while being carried out as fast as possible.

Advantageously, the bottom side of the housing may be provided with a second aperture greater than the first aperture so that the fastening means is able to pass the second aperture and be received in the first aperture.

By having a second aperture greater than the first aperture, the head of the fastening means is able to pass the second aperture but to be received in the first aperture.

In a preferred embodiment of the invention the guide channel may be provided with inwardly extending projections for guiding the strap inside the housing along the longitudinal axis of the housing.

Advantageously, the first aperture of the top side may have a recess, such as a counterbore or as countersinking, for receiving the head of the fastening means in a level below the guiding channel.

In a preferred embodiment of the invention, the inwardly extending projections may be positioned opposing each other.

Advantageously, the entry aperture may be wider then the exit aperture.

In a preferred embodiment of the invention the first aperture of the top side may be provided with a thread.

Advantageously, the first aperture may be positioned with an essentially equal distance to the entry and the exit aperture respectively.

### Brief Description of the Drawing

The invention is explained in detail below with reference to the accompanying drawing, in which
Fig. 1 shows a perspective view of a one-piece fastener according to the invention,
Fig. 2 shows a top view of a one-piece fastener according to the invention,
Fig. 3 shows a cross-sectional view along the line III-III of the one-piece fastener of Fig. 1,
Fig. 4 shows a longitudinal, sectional view along the line IV-IV of the one-piece fastener of Fig. 2, and
Fig. 5 shows the entry aperture of the housing of the one-piece fastener.

### Detailed Description of the Drawings

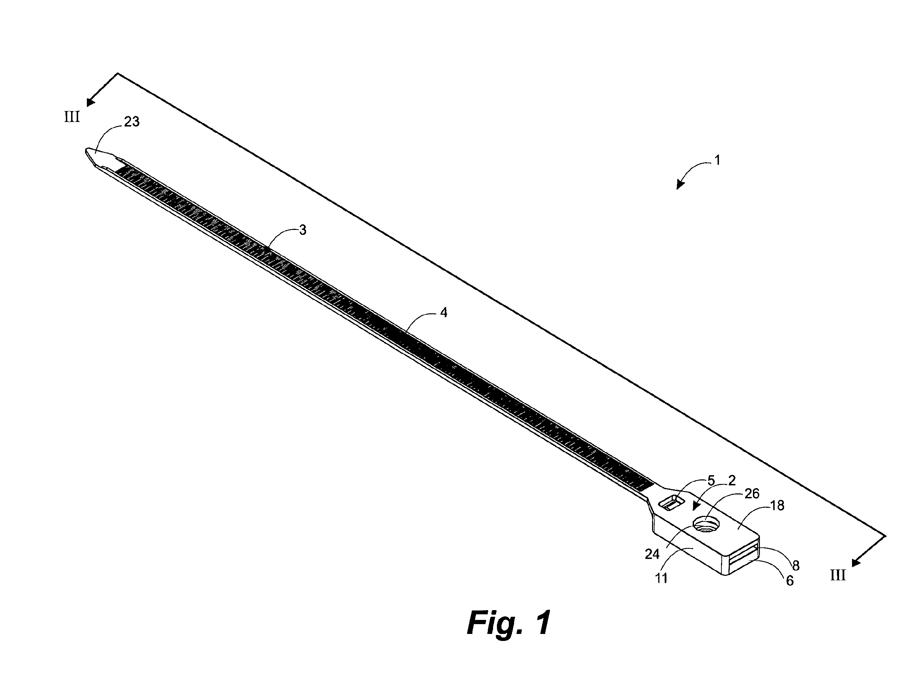

Fig. 1 shows a one-piece fastener (1) having a housing (2) and strap (3). The strap has ratchet-shaped grooves (4) for locking the strap (3) when engaging the locking pawl (5) which is integrated in the housing (2). As shown, the centre axis of the guiding channel is extending parallel to the longitudinal axis of the strap, when the strap is engaged in the housing.

The housing (2) of the fastener comprises a first side (6) having a first inner side surface (7) and an entry aperture (8), a second side (9) having a second inner side surface (10), a third side (11) having a third inner side surface (12) and an exit aperture (13), a fourth side (14) having a fourth inner side surface (15), a top side (16) with a top inner side surface (17), a bottom side (18) having a bottom inner side surface (19). Furthermore, the housing comprises a guiding channel (20) defined by the second and third side surfaces and the top and the bottom sides of the housing.

The top side (16) of the housing (2) has a first aperture (21) for fastening the one-piece fastener (1) to a surface, e.g. a table, a ceiling or a wall, with a fastening means, such as bolts, screws or nails. At a first end of the housing, an entry aperture (8) is situated for guiding a first end of the strap (23) through the housing (2) for securing an element in the one-piece fastener.

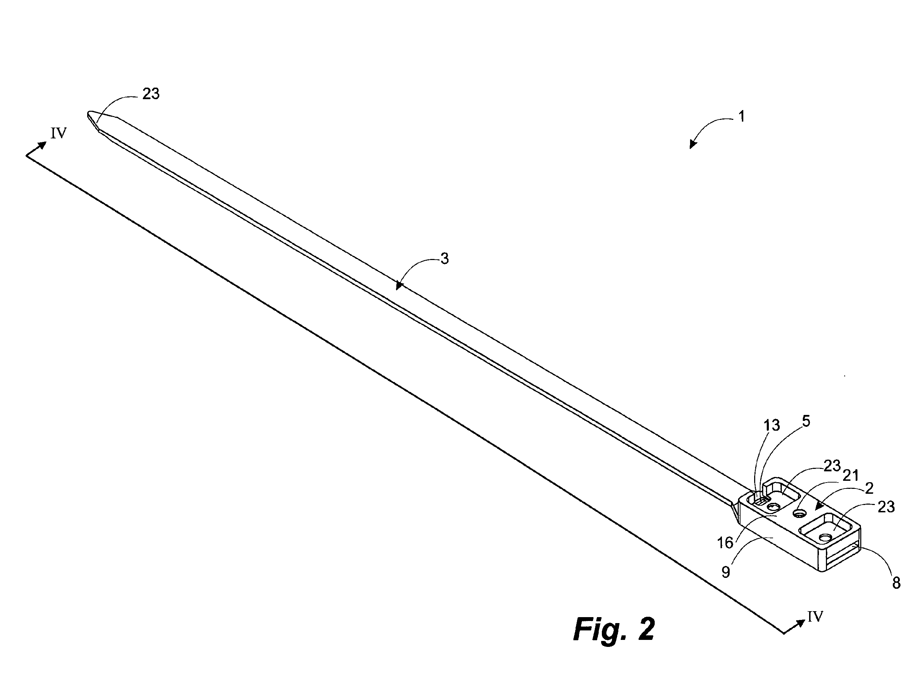

Fig. 2 shows a one-piece fastener (1), seen from the top of the housing, where the second side (9) and the top side (16) of the housing are shown.

The first aperture (21) of the top side (16) may be provided with a recess, such as a counterbore or a countersinking (24). Such counterbore (24) or countersinking ensures that the head of the fastening means (27) does not block the passage of the strap (3) when drawing the strap through the guide channel (20), since the head of the fastening means is conceiled in this recess.

Advantageously, the sizes of the first and second apertures can, from one embodiment to another, be adapted to the different types of fastening means enabling the possibility for the worker to use different fastening means for different tasks, e.g. due to the fact that the size of the fastening means for gypsum is different than the fastening means for wood or concrete. The choice of a fastening means is dependent on the surface to which the one-piece fastener is supposed to fasten an element. Furthermore, the properties of the fastening means should also be compared to the weight of the element to be held by the one-piece fastener.

In a preferred embodiment the one-piece fastener may be made of polymer materials, and can withstand a weight of approx. 60 kg, and the fastening means should obviously have similar capabilities.

In another embodiment, the one-piece fastener is made of metal or nylon, e.g. nylon 6.6. Such element has the flexibility and strength that are necessary for the load needed. However, the one-piece fastener may also be made of any kind of polymer material.

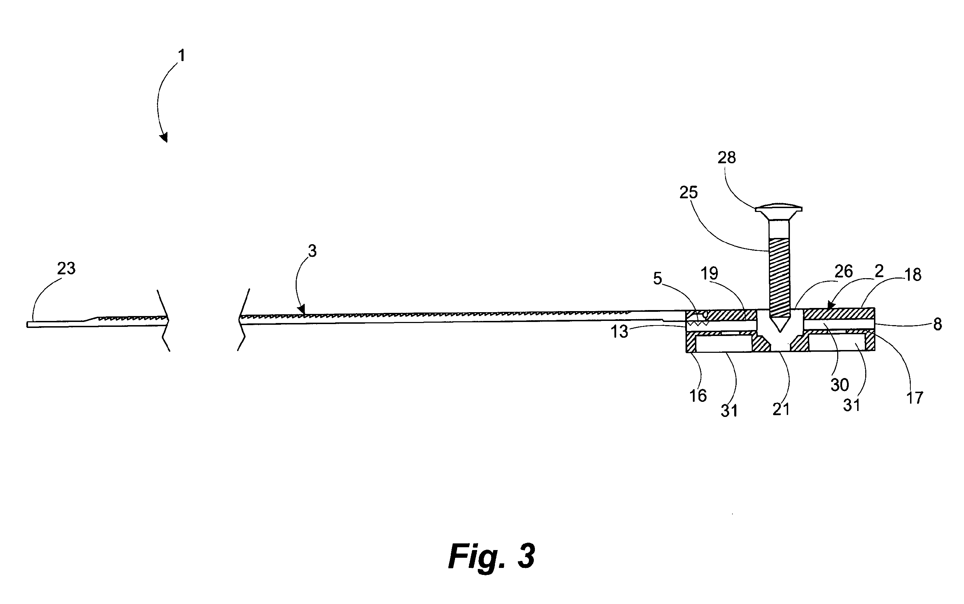

Fig. 3 shows a cross-sectional view along the line III-III of the one-piece fastener of Fig. 1. Fig. 3 shows a fastening means (27) entering through the second aperture (26) of the bottom side of the housing (18).

In one embodiment of the invention the difference in the diameter of the first aperture (21) and the second aperture (26) is 1-20 mm, preferably 2-18 mm, or most preferred 3-16 mm.

As shown, the bottom side (18) has a second aperture (26) greater than the first aperture (21), in order to let the head of the fastening means (27) pass the second aperture (26) but to be received in the first aperture (21). In this way, the head of the fastening means (28) will draw the top side of the one-piece fastener towards the surface, e.g. a ceiling, a wall or table, onto which the one-piece fastener is to be fastened.

In another embodiment, the second aperture (26) has a greater extension than that shown in the drawings. Furthermore, the second aperture may have another shape, e.g. a square, a triangle, a trapeze or a pentagon etc. In yet another, embodiment the bottom side does not exist so that the housing does not have a bottom side.

As shown in Fig. 3 the first aperture (21) is positioned with essentially equal distance to the entry and the exit aperture respectively. When the one-piece fastener has been fasten to a ceiling and element such as a pipe has been bundled into the fastener, the secured element is subjected to its own weight and the strap (3) has its contact points to the housing at the entry aperture (8) and the exit aperture (13). If the one-piece fastener is fastened to a ceiling and not a wall, the load from the element to be secured is distributed equally on each side of the head of the fastening means (28). If the surface is a ceiling, the element will automatically be positioned essentially just beneath the head of the fastening means, whereby the load is distributed in balance around the fastening means.

As can be seen from Fig. 3, the first inner bottom surface (19) of the bottom side (18) of the housing (10) and the inner top surface (17) of the top side (16) of the housing (2) defines a space (30). The strap (2) passes through the space (30) from the entry aperture (8) and out of the exit aperture (13) to secure an element.

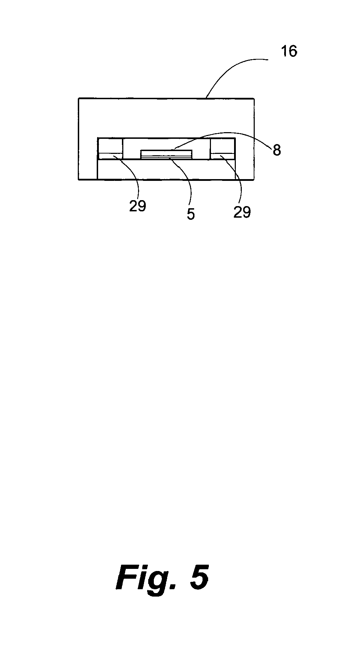

As shown in Fig. 3 and Fig. 5, the top side (16) of the housing has two indentation (31) adapted to receive corresponding distance parts. Such distance parts can be used for a better fastening of the one-piece fastener to a surface near an obstacle, such as water pipes etc. It is necessary that the distance parts are arranged in a manner such that the risk of a dislocation of the distance parts is minimised.

The one-piece fastener can secure all sorts of elements, such as wood plates, cables, wires, pipes, tubes, other electrical installations plants etc. Furthermore, the one-piece fastener can be fastened to any kind of surfaces, such as a table, a ceiling or a wall.

In the drawings, the fastening means is disclosed as a screw, however, the fastening may be any kind of suitable fastening, such as a screw, a bolt or nails.

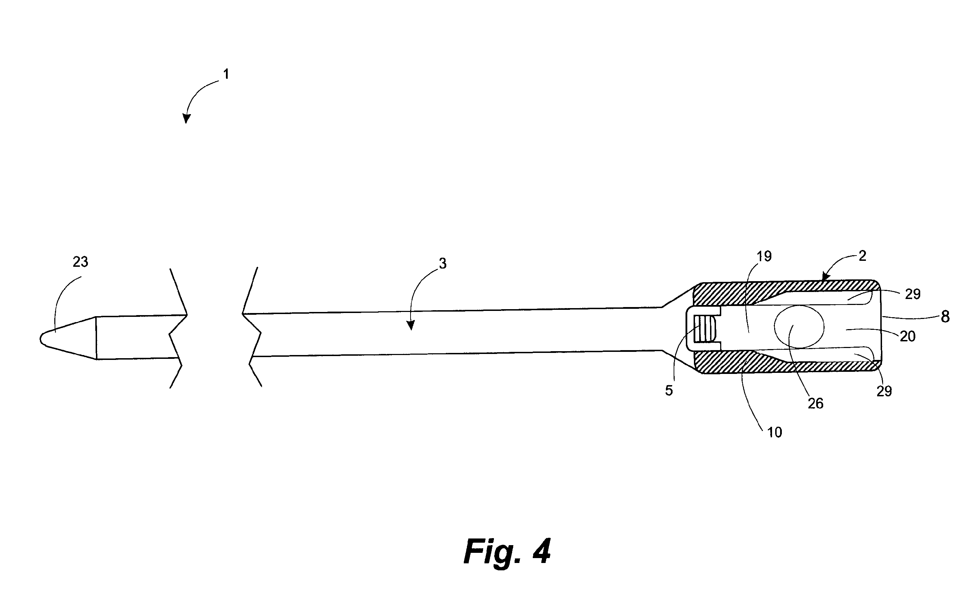

Fig. 4 shows a longitudinal sectional view along the line IV-IV of Fig. 2 of the one-piece fastener. The housing (2) is provided with inwardly extending projections (29) for guiding the strap (3) in the housing along the longitudinal axis of the housing. In order to position the strap (3) in the housing and achieve the best possible locking function between the strap and the locking pawl (5), inwardly extending projections (29) ensure a precise guiding of the strap. In another embodiment, the inwardly extending projections (29) may be positioned opposing each other on the inner surfaces of the second and third sides of the housing. By this design a stiff and rigid housing is obtained.

In Fig. 4, a one-piece fastener has a guide channel with projections (29) permitting that the strap (3) is led from the entry aperture (8) to the exit aperture (13). As can be seen, the guide channel decreases from the entry aperture (8) towards the exit aperture (13) in order to let the strap towards the locking pawl and the more narrow exit aperture (13) prevent the strap from sliding side to side.

Having successfully drawn the strap (3) through the guide channel (20) and engaging the grooves (4) on the strap (3) with the locking pawl (5), the fastening means can not force the strap (3) to disengage the locking pawl (5). If the fastening means is raised above the counterbore or countersinking (24) of the first aperture a pressure is subjected to a part of the strap opposing the head of the fastening means. Thus, the locking pawl (5) and the strap would be tightening their locking position.

Furthermore, when the locking pawl is positioned in the bottom side (18), it is achieved that the locking pawl (5) is hidden behind the secured element. Thus, it is not possible to vandalise or in other way loosen the secured element unless the strap is cut.

As shown in Fig. 4 the entry aperture (8) is wider than the exit aperture (13), whereby it is easier for the worker to position the strap (3) in the housing so that a minimum of time and physical effort are spend whilst holding the often heavy element to be fastened.

The exit aperture (13) is essentially the width of the strap, in order to control the engagement between the locking pawl of the housing (3) and the ratchet-shaped grooves of the strap.

Fig. 5 shows the entry aperture (8) of the housing of the one-piece fastener and how the projections (29) and the locking pawl (5) are placed in relation to the surfaces.

In another embodiment, the strap (3) and the housing (2) may be produced as two separate pieces and subsequently joined by means of a gluing process, a welding process or the like.

## Claims

1. A one-piece fastener (1) comprising
- a housing (2) defining a longitudinal axis, said housing having:
- an entry aperture (8),
- a second side (9) having a second inner side surface (10),
- a third side (11) having a third inner side surface (12) and an exit aperture (13),
- a top side (16) with a top inner surface (17) and
- a guiding channel (20) defined by the second and third inner side surfaces and the top and the bottom of the housing, where said guiding channel has a centre axis,
- a strap defining a longitudinal axis and having a first strap side and a second strap side wherein at least one side is provided with ratchet-shaped grooves,
- wherein the housing (2) further comprises, a locking pawl (5) for engaging the ratchet-shaped grooves (4) on the strap (3), thereby securing the strap (3) in one direction in relation to the longitudinal axis of the strap and wherein the centre axis of the guiding channel is extending parallel to the longitudinal axis of the strap when the strap is engaged in the housing,
- wherein the top side of the housing (2) is provided with a first aperture (21) defining a centre axis perpendicular to the longitudinal axis of the housing and being adapted for receiving a fastening means (27).

2. A one-piece fastener according to claim 1, wherein the bottom side of the housing (18) is provided with a second aperture (26) greater than the first aperture (21) so that the fastening means is able to pass the second aperture (26) and be received in the first aperture (21).

3. A one-piece fastener according to claim 1 or 2, wherein the guide channel is provided with inwardly extending projections (29) for guiding the strap inside the housing (2) along the longitudinal axis of the housing.

4. A one-piece fastener according to claim 1, 2 or 3, wherein the first aperture of the top side (21) has a recess such as a counterbore or countersinking (24) for receiving the head of the fastening means (27) in a level below the guiding channel.

5. A one-piece fastener according to claims 1 to 4, wherein the inwardly extending projections (29) are positioned opposing each other.

6. A one-piece fastener according to claims 1 to 5, wherein the entry aperture is wider then the exit aperture (13).

7. A one-piece fastener according to claims 1 to 6 wherein the first aperture (21) is positioned with an essentially equal distance to the entry and the exit aperture respectively.
